# EUROPEAN PATENT APPLICATION

(11) **EP 3 190 518 A1**
(43) Date of publication of application: **12.07.2017**
(21) Application number: 14881495.7
(22) Date of filing: 18.11.2014
(51) Int. Cl.: G06F 11/30, G06F 1/32

(54) **METHOD AND APPARATUS FOR ACQUIRING POWER CONSUMPTION OF NETWORK ELEMENT DEVICE**

(30) Priority: 19.08.2014 CN 201410408467
(71) Applicant: ZTE Corporation, Shenzhen, Guangdong 518057 (CN)
(72) Inventor: CHEN, Duoduo, Shenzhen Guangdong 518057 (CN); LI, Xiaochun, Shenzhen Guangdong 518057 (CN)
(74) Representative: Savi, Massimiliano
(86) International application number: PCT/CN2014/091441
(87) International publication number: WO 2015/117459

(57) **Abstract**

The present invention provides a method and apparatus for acquiring power consumption of a network element device, the method includes: acquiring designated information of a component in a network element device; determining a current power consumption value of the component according to the designated information; and determining a first power consumption value of the component that is acquired in accordance with a pre-set rule according to a basic power consumption value and the current power consumption value of the component, herein, the basic power consumption value is used for indicating a power consumption value of the component in no-load operation or full-load operation. The above technical solution is used to solve the problem in the existing technology that it is not operable that each of network element devices needs to be externally connected to a power consumption instrument when power consumption detection is conducted on the network element devices, thereby achieving the effect that a power consumption value of the network element devices can be acquired in real time.

## Description

### Technical Field

The present invention relates to the field of communications, and in particular to a method and apparatus for acquiring power consumption of a network element device.

### Background

Access network communication devices need a long-time boot operation, to provide users with uninterrupted Internet access service. These devices are placed in cells, plants, machine rooms of operators and other places, and these places are very sensitive to power consumption of the devices. If one needs to know the power consumption of an actual device, in general, it can be read in real time through externally connecting a power consumption instrument. However, for externally connecting the power consumption instrument, temporary power outage is required for an external connection action, which will interrupt the network element service; in addition, for a place where the network element devices are concentrated, every network element device needs to be externally connected to a power consumption instrument, which does not have the maneuverability either.

At the present stage, the requirement on the energy-saving emission reduction for network element devices is increasingly high, and the Bureau needs more monitoring on a consumption change of the network element devices before and after the energy saving and emission reduction. This not only puts forward the requirements of accuracy, timeliness and convenience on monitoring the power consumption of the network element devices but also provides higher customization requirement on the statistics and query of the power consumption of multiple network element devices under a district of centralized management.

Aiming at the problem in the existing technology that it is not operable that each of network element devices needs to be externally connected to a power consumption instrument when the power consumption detection is conducted on the network element devices, no effective solution is proposed till now.

### Summary

The present invention provides a method and apparatus for acquiring power consumption of a network element device, at least to solve the problem in the existing technology that it is not operable that each of network element devices needs to be externally connected to a power consumption instrument when the power consumption detection is conducted on the network element devices.

According to one embodiment of the present invention, there is provided a method for acquiring power consumption of a network element device, including: acquiring designated information of a component in a network element device; determining a current power consumption value of the component according to the designated information; determining a first power consumption value of the component according to a basic power consumption value and the current power consumption value of the component, herein, the basic power consumption value is used for indicating a power consumption value of the component in no-load operation or full-load operation; and determining a second power consumption value of the network element device according to the first power consumption value.

In an exemplary embodiment, the designated information includes at least one of the following: resource information of the component, service information of the component, and running status information of the component.

In an exemplary embodiment, the resource information includes at least one of the following: main control board information, power board information, fan board information and backplane information; and/or, the service information includes at least one of the following: broadband information, voice user information and a number of users; and/or, the running status information includes at least one of the following: running status information of a broadband user port, transmission power information of an Internet access port, on/off-hook status information of a narrow-band port, and rotating speed information of a fan board.

In an exemplary embodiment, when the component is in no-load operation, determining a first power consumption value of the component according to a basic power consumption value and the current power consumption value of the component includes: acquiring a basic power consumption value of the component in no-load operation; comparing the basic power consumption value and the current power consumption value, and taking a difference between the current power consumption value and the basic power consumption value as the first power consumption value.

In an exemplary embodiment, when the component is in full-load operation, determining a first power consumption value of the component according to a basic power consumption value and the current power consumption value of the component includes: acquiring a basic power consumption value of the component in full-load operation; and obtaining the first power consumption value by comparing the basic power consumption value and the current power consumption value.

In an exemplary embodiment, after obtaining the second power consumption value of the network element device according to the first power consumption value, the method further includes: performing statistics on a second power consumption value/values of one or more network element devices, and generating a report, herein the report is used for indicating a dynamic change of an actual power consumption value of the network element device.

In an exemplary embodiment, obtaining the second power consumption value of the network element device according to the first power consumption value includes: adding one or more first power values to obtain the second power consumption value of the network element device when the component is in no-load operation.

In an exemplary embodiment, obtaining the second power consumption value of the network element device according to the first power consumption value includes: subtracting one or more first power values to obtain the second power consumption value of the network element device when the component is in full-load operation.

According to another embodiment of the present invention, there is provided an apparatus for acquiring power consumption of a network element device, including: a first acquiring module, arranged to acquire designated information of a component in the network element device; a first determination module, arranged to: determine a current power consumption value of the component according to the designated information; a second acquiring module, arranged to: determine a first power consumption value in accordance with a preset rule according to a basic power consumption value and the current power consumption value of the component, herein, the basic power consumption value is used for indicating a power consumption value of the component in no-load operation or full-load operation; and a second determination module, arranged to: determine a second power consumption value of the network element device according to the first power consumption value.

In an exemplary embodiment, the apparatus further includes: a generation module, arranged to: perform statistics on a second power consumption value/values of one or more network element devices, and generate a report, herein the report is used for indicating a dynamic change of an actual power consumption value of the network element device.

In the present invention, designated information of a component in a network element device is acquired; a current power consumption value of the component is determined according to the designated information; a first power consumption value of the component according to a basic power consumption value and the current power consumption value of the component is determined, herein, the basic power consumption value is used for indicating a power consumption value of the component in no-load operation or full-load operation; and a second power consumption value of the network element device is determined according to the first power consumption value, the problem in the existing technology that it is not operable that each of network element devices needs to be externally connected to a power consumption instrument when power consumption detection is conducted on the network element devices, is solved, thereby achieving the effect that a power consumption value of the network element devices can be acquired in real time.

### Brief Description of Drawings

The accompanying drawings described herein are used to provide further understanding on the present invention and constitute a part of the present application, and the illustrated embodiments of the present invention and the description thereof are used to explain the present invention but do not constitute an inappropriate limitation to the present invention. Herein:
FIG. 1 is a flow chart of a method for acquiring power consumption of a network element device according to an embodiment of the present invention;
FIG. 2 is a block diagram of a structure of an apparatus for acquiring power consumption of a network element device according to an embodiment of the present invention;
FIG. 3 is a block diagram of an alternative structure of an apparatus for acquiring power consumption of a network element device according to an embodiment of the present invention;
FIG. 4 is a block diagram of a structure of an apparatus for acquiring power consumption of a network element device according to an alternative embodiment of the present invention;
FIG. 5 is a flow chart of a method for acquiring power consumption of a network element device in real time according to an alternative embodiment of the present invention.

### Detailed Description

The present invention is described in detail with reference to the accompanying drawings and in combination with embodiments hereinafter. It should be illustrated that, in the case of not conflicting, the embodiments in the present application and features in these embodiments can be combined with each other.

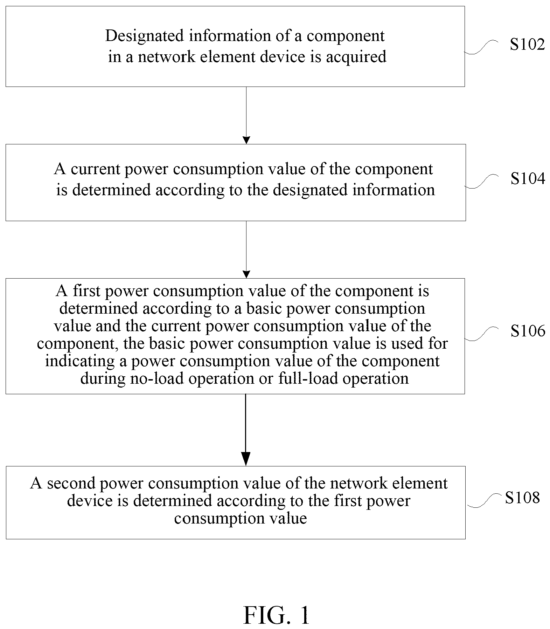

In the present embodiment, a method for acquiring power consumption of a network element device of the embodiment of the present invention is provided, and FIG. 1 is a flow chart of the method for acquiring the power consumption of the network element device according to the embodiment of the present invention, and as shown in FIG. 1, the procedure includes the following steps.

In step S102, designated information of a component in a network element device is acquired.

In step S104, a current power consumption value of the component is determined according to the designated information.

In step S106, a first power consumption value of the component is determined according to a basic power consumption value and the current power consumption value of the component, herein, the basic power consumption value is used for indicating a power consumption value of the component in no-load operation or full-load operation.

In step S108, a second power consumption value of the network element device is determined according to the first power consumption value.

In the embodiment of the present invention, designated information of a component in a network element device is acquired; a current power consumption value of the component is determined according to the designated information; a first power consumption value is obtained in accordance with a pre-set rule according to a basic power consumption value and the current power consumption value of the component, herein, the basic power consumption value is used for indicating a power consumption value of the component in no-load operation or full-load operation; and a second power consumption value of the network element device is determined according to the first power consumption value, the problem in the existing technology that it is not operable that each of network element devices needs to be externally connected to a power consumption instrument when the power consumption detection is conducted on the network element devices, is solved, thereby achieving the effect that a power consumption value of the network element devices can be acquired in real time.

Alternatively, the above designated information includes at least one of the following: resource information of the component, service information of the component and running status information of the component.

Alternatively, the above resource information includes at least one of the following: main control board information, power board information, fan board information and backplane information; and/or, the service information includes at least one of the following: broadband information, voice user information and the number of users; and/or, the running status information includes at least one of the following: running status information of a broadband user port, transmission power information of an Internet access port, on/off-hook status information of a narrow-band port, and rotating speed information of a fan board.

Alternatively, when the component in no-load operation, determining a first power consumption value of the component according to the basic power consumption value and the current power consumption value of the component includes: acquiring a basic power consumption value of the component in no-load operation; comparing the basic power consumption value and the current power consumption value, and taking a difference between the current power consumption value and the basic power consumption value as the first power consumption value.

Alternatively, when the component is in full-load operation, determining the first power consumption value of the component according to the basic power consumption value and the current power consumption value of the component includes: acquiring a basic power consumption value of the component in full-load operation; obtaining the first power consumption value by comparing the basic power consumption value and the current power consumption value.

Alternatively, after obtaining the second power consumption value of the network element device according to the first power consumption value, statistics is performed on a second power consumption value of one or more network element devices, and a report is generated, the report is used for indicating a dynamic change of an actual power consumption value of the network element device.

Alternatively, obtaining the second power consumption value of the network element device according to the first power consumption value includes: adding one or more first power values to obtain the second power consumption value of the network element device when the component is unloaded.

Alternatively, obtaining the second power consumption value of the network element device according to the first power consumption value includes: subtracting one or more first power values to obtain the second power consumption value of the network element device when the component is fully loaded.

The present embodiment further provides an apparatus for acquiring power consumption of a network element device, and the apparatus is used to achieve the above embodiment and alternative implementation modes, which have been illustrated and will no longer go into details. As used hereinafter, the term "module" can be a combination of software and/or hardware that achieve a predetermined function. Although the apparatus described in the following embodiments are alternatively realized by software, the realization of hardware or a combination of software and hardware is also possible and conceived.

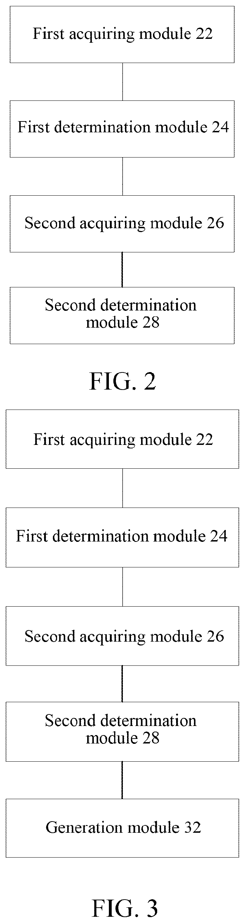

FIG. 2 is a block diagram of a structure of an apparatus for acquiring power consumption of a network element device according to an embodiment of the present invention; and as shown in FIG. 2, the apparatus includes: a first acquiring module 22, arranged to acquire designated information of a component in the network element device; a first determination module 24, arranged to: determine a current power consumption value of the component according to the designated information; a second acquiring module 26, arranged to: obtain a first power consumption value in accordance with a preset rule according to a basic power consumption value and the current power consumption value of the component, herein, the basic power consumption value is used for indicating a power consumption value of the component in no-load operation or full-load operation; and a second determination module 28, arranged to: determine a second power consumption value of the network element device according to the first power consumption value.

FIG. 3 is a block diagram of an alternative structure of an apparatus for acquiring power consumption of a network element device according to an embodiment of the present invention; and as shown in FIG. 3, besides all modules shown in FIG. 2, the apparatus further includes a generation module 32, arranged to: perform statistics on a second power consumption value/values of one or more network element devices, and generate a report, the report is used for indicating a dynamic change of an actual power consumption value of the network element device.

In order to better illustrate the present invention, it is illustrated by combining with an alternative embodiment of the present invention hereinafter.

The object of the alternative embodiment of the present invention is to provide a software simulation mode to calculate real-time power consumption of the network element device, overcoming inconvenience of having to externally connect the power consumption instrument to acquire the power consumption in a practical environment, and on the premise of ensuring accurate calculation, it may further extend and support real-time query for multiple sets of network element devices, and provide functions such as timing collection, statistical comparison, report generation, facilitating mastering the real-time and historical information of multiple devices at the same time.

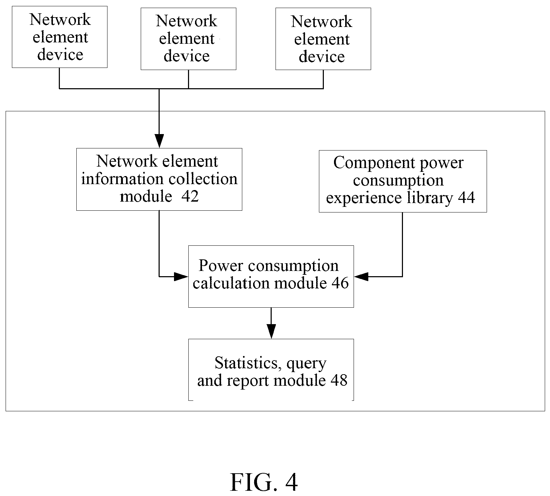

FIG. 4 is a block diagram of a structure of a network element device according to an alternative embodiment of the present invention, and as shown in FIG. 4, the apparatus of the alternative embodiment of the present invention includes: a network element information collection module 42, responsible for collecting resource information, service information and running status of the network element device, for subsequent calculation of power consumption. The resource information includes main control board, power board, fan board and backplane information on the network element; the service information includes: broadband, information and the number of voice users, etc.; the running status includes: a running status of a broadband user port, transmission power of an Internet access port, an on/off-hook status of a narrow-band port, and a rotating speed of a fan board. All of the information will affect the output power consumption of the network element.

It should be noted that, a network element information collection module instance is only responsible for collection of a network element device; if multiple network element devices are required to be managed, multiple network element information collection module instances should be used and run concurrently.

The way of acquiring the network element information to be collected is extended from the network element information collection module. There may be multiple modes for flexible selection according to the actual situation. The way of acquiring a network element list includes: importing from an existing storage file, herein the storage file stores information of all network element devices; or acquiring from a network management system.

The network element information collection module acquires the network element information in real time or regularly.

A component power consumption experience library 44 maintains power consumption influence values of various components of a set of network elements. These components namely are information of various parts acquired by the network element information collection module. There are two selection schemes for the power consumption experience library.
(1) An addition formula based on no-load situation: a power consumption experience value of a network element device in the no-load operation (i.e., all ports of the equipped broadband user board are disabled, all ports of the narrow-band user board are hung up, the fan stops rotating) is used as basic power consumption; for every enabled broadband port, its deviation value relative to a disabled status is calculated; for every off-hook narrow-band port, its deviation value relative to an on-hook status is calculated; for the current rotating fan, its deviation value relative to a rotation stopping status is calculated. With these deviation values, the power consumption will be calculated in an addition mode in the power consumption calculation module.
(2) A subtraction formula based on full-load situation: a power consumption experience value of a network element device in the full-load operation (i.e., all ports of the equipped broadband user board are enabled but offline, all ports of the narrow-band user board are hooked off, the fan is at full speed) is used as basic power consumption; for every disabled or online broadband port, its deviation value relative to an enabled but offline status is calculated; for every on-hook narrow-band port, its deviation value relative to an off-hook status is calculated; for the current rotating fan, its deviation value relative to a full rotating status is calculated. With these deviation values, the power consumption will be calculated in a subtraction mode in the power consumption calculation module.

It should be noted that all involved components need to be incorporated into the component power consumption experience library, which is constantly modified in different environments to be as accurate as possible.

A power consumption calculation module 46 obtains basic data from the network element information collection module and the component power consumption experience library, substitutes into a built-in formula library for calculation to obtain a real-time power consumption value of the current network element device. The formula library is related to whether the experience library selects an addition or a subtraction formula. That module is only responsible for operation but is not responsible for storing result data.

A statistics, query and report module 48 summarizes real-time power consumption of a single network element obtained by the power consumption calculation module, and subsequently can perform statistics and query and generate reports as required. The module stores a result of every power consumption calculation, and the specific statistical report format should be flexible and customizable, and easy to change. The common scene is to output reports of multiple network elements in a designated area, or the power consumption change of the network element within a specified time range.

With an alternative embodiment of the present invention, processing and calculation of the running power consumption of the network element device includes the following steps.

In step S202, resource information, service information and running status of the network element device are collected, for subsequently calculating the power consumption. All of the information will affect the output power consumption of the network element. The resource information includes main control board, power board, fan board and backplane information, type and the number of user boards, etc. on the network element; the service information includes broadband, information and the number of voice users, etc.; the running status includes a running status of a broadband user port, transmission power of an Internet access port, an on/off-hook status of a narrow-band port, and a rotating speed of a fan board, etc.. And the protocol for interacting with the network element can be SNMP, TCP, etc..

In step S204, it is judged whether the real-time information of the network element is acquired successfully; if the acquisition fails, then it is to end; otherwise, it is to enter the next step.

In step S206, the collected information is used to call the component power consumption experience library, and the corresponding experience value data are obtained. This step needs to determine whether to select the addition formula in no-load situation or the subtraction formula in full-load situation. If the call fails or there is no corresponding data in the experience library, it is to end.

In step S208, the obtained experience value data are used to substitute into a formula library built in a power consumption calculation module for calculation to obtain the real-time power consumption value of the current network element.

In step S210, real-time power consumption of each network element obtained by the power consumption calculation module is summarized, and subsequently statistics and query can be performed and the reports can be generated as required. Generally, reports of multiple network elements in a designated area, or reports of power consumption changes of the network elements in a specified time range can be output.

Through the above alternative embodiment, the problem in the existing technology that no pure application software solves the power consumption calculation of the communication device in the field of broadband access network is solved. For example, if it is required to measure the power consumption, basically a mode of externally connecting the power consumption instrument is used, and one network element device is corresponding to one power consumption instrument, which leads to a significant increase in hardware cost.

The alternative embodiment of the present invention provides a set of simulation formulas, assisted by real-time information collected from the network element and a set of experience values after stringent verification, which can accurately calculate the current power consumption, and meanwhile performs statistics and query on multiple network element devices, and provides flexible customization function, and outputs the reports on demand. It not only has the characteristics of accuracy and real time, but also increases the advantages of convenience, unified management and customization compared with the existing mode of externally connecting power consumption instrument.

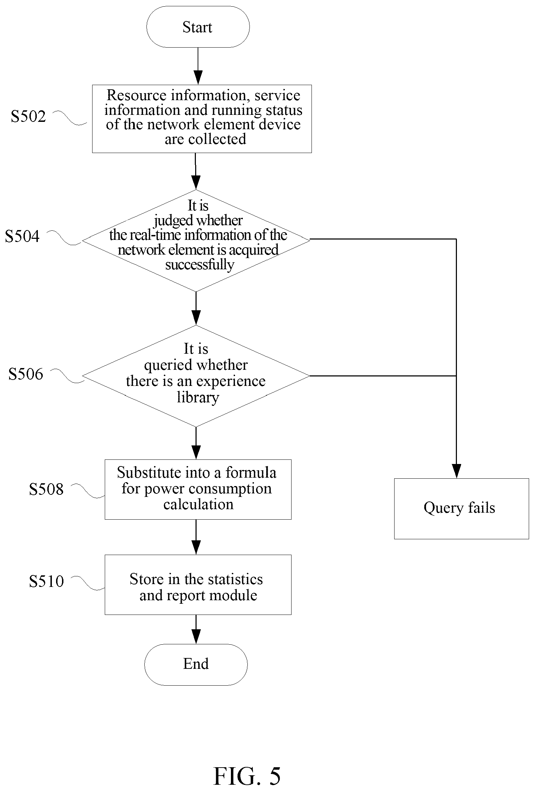

FIG. 5 is a flow chart of a method for acquiring power consumption of a network element device in real time according to an alternative embodiment of the present invention; and the specific implementation mode of the alternative embodiment of the present invention is further described in details by combining with the basic flow chart in FIG. 5 hereinafter.

In step S502, resource information, service information and running status of the network element device are collected, for subsequently calculating the power consumption. All of the information will affect the output power consumption of the network element. The resource information includes main control board, power board, fan board and backplane information, type and the number of user boards, etc., on the network element; the service information includes broadband, information and the number of voice users; the running status includes a running status of a broadband user port, transmission power of an Internet access port, an on/off-hook status of a narrow-band port, and a rotating speed of a fan board, etc.. And the protocol for interacting with the network element can be SNMP, TCP, etc.

In step S504, it is judged whether the real-time information of the network element is acquired successfully; if the acquisition fails, then it is to end; otherwise, it is to enter the next step S506.

In step S506, the collected information is used to call the component power consumption experience library, and the corresponding experience value data are obtained. This step needs to determine whether to select the addition formula in a no-load situation or select the subtraction formula in a full-load situation. If the call fails or there is no corresponding data in the experience library, then it is to end.

In step S508, the obtained experience value data are used to substitute into a formula library built in a power consumption calculation module for calculation to obtain the real-time power consumption value of the current network element.

In step S510, real-time power consumption of each network element obtained by the power consumption calculation module is summarized, and subsequently statistics and query can be performed and reports can be generated as required. Generally, reports of multiple network elements in a designated area, or reports of power consumption changes of the network elements in a specified time range can be output.

Obviously, those skilled in the art should understand that the above-mentioned various modules or various steps in the present invention can be carried out by a universal computing device, and they can be integrated in a single computing device, or distributed in a network made up by a plurality of computing devices; alternatively, they can be implemented by executable program codes of the computing devices, and thus they can be stored in a storage apparatus and implemented by the computing device, and in some situation, the shown or described steps can be executed according to a sequence different from the sequence here, or they are carried out by making into various integrated circuit modules respectively, or making a plurality of modules or steps therein into a single integrated circuit module. As such, the present invention is not limited to any specific combination of hardware and software.

The above description is only alternative embodiments of the present invention and is not intended to limit the present invention. For those skilled in the art, the present invention can have various modifications and variations. All of modifications, equivalents and/or improvement without departing from the rule and essence of the present invention should be embodied in the protection scope of the present invention.

### Industrial Applicability

Based on the above technical scheme provided by the embodiments of the present invention, designated information of a component in a network element device is acquired; a current power consumption value of the component is determined according to the designated information; a first power consumption value of the component is determined according to a basic power consumption value and the current power consumption value of the component, herein, the basic power consumption value is used for indicating a power consumption value of the component in no-load operation or full-load operation; and a second power consumption value of the network element device is determined according to the first power consumption value, the problem in the existing technology that it is not operable that each of network element devices needs to be externally connected to a power consumption instrument when the power consumption detection is conducted on the network element devices, is solved, thereby achieving the effect that a power consumption value of the network element devices can be acquired in real time.

## Claims

1. A method for acquiring power consumption of a network element device, comprising:
acquiring designated information of a component in a network element device;
determining a current power consumption value of the component according to the designated information;
determining a first power consumption value of the component according to a basic power consumption value and the current power consumption value of the component, wherein, the basic power consumption value is used for indicating a power consumption value of the component in no-load operation or full-load operation; and
determining a second power consumption value of the network element device according to the first power consumption value.

2. The method according to claim 1, wherein, the designated information comprises at least one of the following: resource information of the component, service information of the component, and running status information of the component.

3. The method according to claim 2, wherein,
the resource information comprises at least one of the following: main control board information, power board information, fan board information and backplane information; and/or,
the service information comprises at least one of the following: broadband information, voice user information and a number of users; and/or,
the running status information comprises at least one of the following: running status information of a broadband user port, transmission power information of an Internet access port, on/off-hook status information of a narrow-band port, and rotating speed information of a fan board.

4. The method according to claim 1, wherein, when the component is in no-load operation, determining a first power consumption value of the component according to a basic power consumption value and the current power consumption value of the component comprises:
acquiring a basic power consumption value of the component in no-load operation;
comparing the basic power consumption value and the current power consumption value, and taking a difference between the current power consumption value and the basic power consumption value as the first power consumption value.

5. The method according to claim 1, wherein, when the component is in full-load operation, determining a first power consumption value of the component according to a basic power consumption value and the current power consumption value of the component comprises:
acquiring a basic power consumption value of the component in full-load operation; and
obtaining the first power consumption value by comparing the basic power consumption value and the current power consumption value.

6. The method according to claim 1, wherein, after obtaining the second power consumption value of the network element device according to the first power consumption value, the method further comprises:
performing statistics on a second power consumption value/values of one or more network element devices, and generating a report, wherein the report is used for indicating a dynamic change of an actual power consumption value of the network element device.

7. The method according to claim 1, wherein obtaining the second power consumption value of the network element device according to the first power consumption value comprises:
adding one or more first power values to obtain the second power consumption value of the network element device when the component is in no-load operation.

8. The method according to claim 1, wherein obtaining the second power consumption value of the network element device according to the first power consumption value comprises:
subtracting one or more first power values to obtain the second power consumption value of the network element device when the component is in full-load operation.

9. An apparatus for acquiring power consumption of a network element device, comprising:
a first acquiring module, arranged to acquire designated information of a component in the network element device;
a first determination module, arranged to: determine a current power consumption value of the component according to the designated information;
a second acquiring module, arranged to: determine a first power consumption value of the component according to a basic power consumption value and the current power consumption value of the component, wherein, the basic power consumption value is used for indicating a power consumption value of the component in no-load operation or full-load operation; and
a second determination module, arranged to: determine a second power consumption value of the network element device according to the first power consumption value.

10. The apparatus according to claim 9, further comprising:
a generation module, arranged to: perform statistics on a second power consumption value/values of one or more network element devices, and generate a report, wherein the report is used for indicating a dynamic change of an actual power consumption value of the network element device.
